# EUROPEAN PATENT APPLICATION

(11) **EP 1 762 932 A2**
(43) Date of publication of application: **14.03.2007**
(21) Application number: 06123457.1
(22) Date of filing: 11.12.2003
(51) Int. Cl.: G06F 9/445

(54) **Method and an apparatus for controlling executables running on blade servers**

(62) Divisional of application: 03777157.3
(71) Applicant: Fusion Dynamic Ltd., 52573 Ramat Gan (IL)
(72) Inventor: Barnea, Amir, 69547, Tel Aviv (IL); Ilany, Ran, 69624, Tel Aviv (IL)
(74) Representative: Modiano, Micaela Nadia

(57) **Abstract**

A method and apparatus for controlling at least one executable on a blade server having a controller, which is accessible to the blade server and to at least one blade having access to a storage device in association with the controller. The controller has access to a source snapshot of at least one executable stored on the storage device. An available blade is selected for loading an instance of a running snapshot associated with the source snapshot, and the instance of the running snapshot is loaded to the available blade.

## Description

### FIELD OF THE INVENTION

This invention relates to blade servers, in particular to controlling executables running on blade servers.

### BACKGROUND OF THE INVENTION

In many computer systems it is important to provide high reliability and high capacity of operation. One way to provide such high reliability and high performance is to design a system providing redundant resources, in a way that if one component of the system fails, the system remains operational using the redundant resources.

US 2003/0033365 ("Low cost computer system module interface", published February, 2003) discloses an information processing module in the form of a blade server provided for a modular computer system, for example a high density computer system. To enhance reliability, multiple redundant information connections are provided from the information. To reduce the cost of providing such multiple redundant information connections, a common information protocol interface is shared between information connections. A common physical layer interface can also be shared between information connections. For example, switching logic can be provided between the common physical layer interface and the information connections. Alternatively, a common information protocol interface can be connected via switching logic to multiple physical layer interfaces (e.g., one per information connection).

WO 0227469 ("Flow scheduling and architecture for network application apparatus", published April, 2002) discloses a method and system for distributing flows between a multiple processors. The flows can be received from an external source such as a network, by a front-end processor that recognizes the flow and the associated request, and identifies at least one internal application processor to process the request/flow. Applications processors can be understood to belong to a group, wherein applications processors within a group can be configured identically. A control processor can collect the intrinsic applications processor data, compute the flow scheduling vectors, and transfer the flow scheduling vectors to the front end processor.

The above-mentioned prior art teach approaches requiring dedicated, non-standard hardware.

### SUMMARY OF THE INVENTION

It is an object of the invention to provide a method and apparatus for controlling an executable on a blade server having a controller that is accessible to the blade server and to at least one blade having access to a storage device in association with the controller that is suitable for use with standard hardware.

This objective is realized in accordance with a first aspect of the invention by method for controlling at least one executable on a blade server having a controller accessible to the blade server and to at least one blade having access to a storage device in association with said controller, said controller having access to a source snapshot of the at least one executable stored on the storage device, the method comprising:
selecting an available one of said blades for loading an instance of a running snapshot associated with said source snapshot;
loading the instance of the running snapshot to the available one of said blades.

According to another aspect of the invention, there is provided a method for providing access to a blade associated with a blade server via at least one virtual bridged Local Area Network (LAN), the method comprising:
configuring a switch coupled to said blade server for allowing access to said at least one virtual bridged LAN; and
loading an agent to said blade being configured to provide access to said at least one virtual bridged LAN.

According to another aspect of the invention, there is provided a method for configuring a switch associated with a blade server for providing access to at least one virtual bridged Local Area Network (LAN), the method comprising:
accessing configuration data stored on an accessible storage device; and
relaying said configuration data to said switch for providing access to said at least one virtual bridged LAN.

According to another aspect of the invention, there is provided a switch configuration apparatus for configuring a switch associated with a blade server for providing access to at least one virtual bridged Local Area Network (LAN), the apparatus comprising:
a configuration data access unit for accessing configuration data stored on an accessible storage device; and
a switch configuration unit coupled to said configuration data access unit for relaying said configuration data to said switch for providing access to said at least one virtual bridged LAN.

According to another aspect of the invention, there is provided a method for providing access to a blade associated with a blade server via at least one virtual bridged Local Area Network (LAN), the method comprising:
configuring an image of agent for providing access to said at least one virtual bridged LAN; and
loading an instance of said image to said blade for allowing said blade to access said at least one virtual bridged LAN.

According to yet another aspect of the invention, there is provided a method for providing access to a blade associated with a blade server via at least one virtual bridged Local Area Network (LAN), the method comprising:
monitoring a Network Interface Card (NIC)coupled to said blade; and
encoding network packetsreceived on said NIC for providing said blade with access to said at least one virtual bridged LAN.

According to another aspect of the invention, there is provided a method for providing tolerance to at least one executable loaded to a blade accessible to a blade server, the method comprising:
receiving data indicative of migration of said blade to a redundant NIC;
detecting the operating status of a switch accessible by said blade; and
if the detected operating status indicates that said switch is not operating for a predetermined duration, bypassing a connection between said switch and said blade.

In a further aspect the invention provides a controlling apparatus for controlling at least one executable on a blade server having a controller accessible to the blade server and to at least one blade having access to a storage device in association with said controller, said controller having access to a source snapshot of at least one executable stored on the storage device, the controlling apparatus comprising:
a blade selector for selecting an available one of said blades for loading an instance of a running snapshot associated with said source snapshot; and
a snapshot loader for loading the instance of the running snapshot to the available one of said blades selected by the blade selector.

According to another aspect of the invention, there is provided an access configuration apparatus for providing access to a blade associated with a blade server via at least one virtual bridged Local Area Network (LAN), the apparatus comprising:
a switch configuration device for configuring a switch coupled to said blade server for allowing access to said at least one virtual bridged LAN; and
an agent loader for loading an agent to said blade, the agent being configured to provide access to said at least one virtual bridged LAN, configured on the switch by the switch configuration device.

According to another aspect of the invention, there is provided a blade access configuration apparatus for providing access to a blade associated with a blade server via at least one virtual bridged Local Area Network (LAN), the apparatus comprising:
an agent configuration device for configuring an image of an agent for providing access to said at least one virtual bridged LAN; and
an agent loader for loading an instance of said image to said blade for allowing said blade to access said at least one virtual bridged LAN, configured by the agent configuration device.

According to another aspect of the invention, there is provided an apparatus for providing access to a blade associated with a blade server via at least one virtual bridged Local Area Network (LAN), the apparatus comprising:
a monitoring unit for monitoring a Network Interface Card (NIC) coupled to said blade; and
packet encoder for encoding network packets received on said NIC for providing said blade with access to said at least one virtual bridged LAN.

According to yet another aspect of the invention, there is provided an apparatus for providing network fault tolerance to at least one instance loaded to a blade installed in a blade server, the apparatus comprising:
a migration detector for receiving a migration indication from said blade;
a switch status detection unit for detecting status of a switch associated with said blade server having access to said blade; and
a bypass generator for bypassing a connection between said switch and said blade.

### BRIEF DESCRIPTION OF THE DRAWINGS

In order to understand the invention and to see how it may be carried out in practice, a preferred embodiment will now be described, by way of non-limiting example only, with reference to the accompanying drawings, in which:
**Fig. 1** is a block diagram illustrating a blade server, according to an embodiment of the invention;
**Fig. 2** is a detailed block diagram illustrating a blade server, according to one embodiment of the invention;
**Fig. 3** is a flow chart showing the principal operations carried out by a controller for selecting an available blade for running an executable, according to one embodiment of the invention;
**Fig. 4** is a flow chart showing the principal operations carried out by a controller for identifying whether a blade is an available blade for loading an instance of an executable, according to one embodiment of the invention;
**Fig. 5** is a block diagram illustrating a switch and two blades accessible through multiple virtual bridged LAN's access, according to one embodiment of the invention;
**Fig. 6** is a flow chart showing principal operations carried out by a controller for configuring a switch for providing multiple virtual bridged LANs access, according to one embodiment of the invention;
**Fig. 7** is a flow chart showing principal operations carried out by a controller for loading an gent providing multiple virtual bridged LANs access on to a blade, according to one embodiment of the invention;
**Fig. 8** is a flow chart showing principal operations carried out by an agent for providing multiple virtual bridged LANs access to at least one executable running on a blade, according to one embodiment of the invention;
**Fig. 9** is a flow chart showing principal operations carried out by a controller for providing network fault tolerance, according to one embodiment of the invention;
**Fig. 10** is a flow chart showing principal operations carried out by a controller for generating a running snapshot, for loading an instance of the running snapshot to an available blade and for generating intermediate snapshots, according to one embodiment of the invention;
**Fig. 11** is a flow chart showing in detail the operations carried out by a controller for loading an instance of at least one executable on an available blade, according to one embodiment of the invention;
**Fig. 12** is a flow chart showing the operations carried out by a controller for storing an intermediate snapshot in a repository of snapshots, according to one embodiment of the invention;
**Fig. 13** is a flow chart showing the principal operations carried out by a controller for installing an executable on the controller's storage device, according to one embodiment of the invention;
**Fig. 14** is a flow chart showing the operations carried out by a master controller for synchronizing at least one slave controller, according to one embodiment of the invention;
**Fig. 15** is a block diagram illustrating a switch configuration apparatus for configuring a switch associated with a blade server providing access to at least one virtual bridged LAN, according to one embodiment of the invention;
**Fig. 16** is a block diagram illustrating modules comprising a controlling apparatus accessible to a blade server, according to one embodiment of the invention;
**Fig. 17** is a block diagram illustrating an access configuration apparatus, according to one embodiment of the invention;
**Fig. 18** is a block diagram illustrating a blade access configuration apparatus, according to one embodiment of the invention;
**Fig. 19** is a block diagram illustrating a blade access apparatus, according to one embodiment of the invention;
**Fig. 20** is a block diagram illustrating a network fault tolerance apparatus, according to one embodiment of the invention;

### DETAILED DESCRIPTION OF THE INVENTION

In the following description, the same reference numerals are used in different figures to refer to identical components.

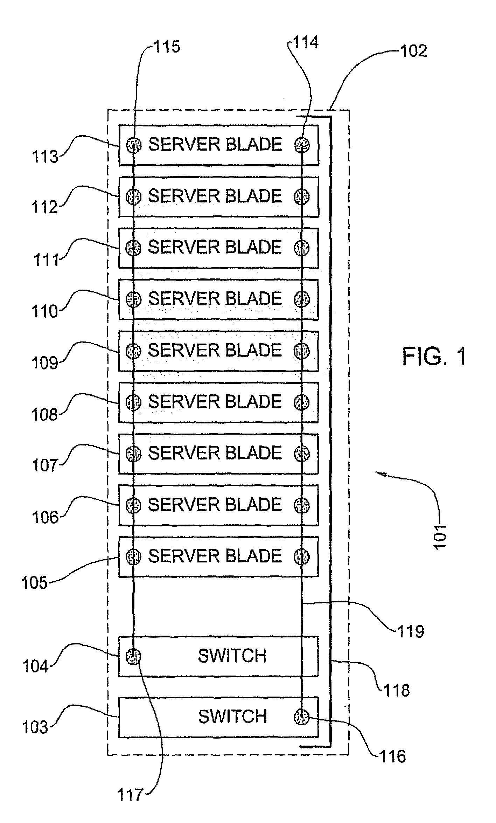

**Fig. 1** is a block diagram illustrating a blade server **101** according to an embodiment of the invention. The illustrated blade server **101** includes one chassis **102,** to which **11** blades are coupled, out of which two **(103** and **104)** are networking switch blades (hereinafter referred to shortly as "switches") and the other nine **(105 - 113)** are server blades (hereinafter referred to shortly as "blades"). Each blade, according to this embodiment, is associated with at least one Central Processing Unit (CPU, not shown), memory (such as RAM, not shown) and two Network Interface Cards (NICs, **114** and **115**). One NIC (**114**) is intended to connect the blade to one switch **103,** and the other is intended to connect it to the other switch **104.** Each switch (**103, 104**) is associated, therefore, with at least nine NICs (in **Fig. 1** represented together as **116, 117**), one for each blade.

The switches and the blades **(103 - 113)** are in association with the chassis **102** through a back plane **118** having at least one bus, such as a serial bus. The bus is used, for example, for managing, controlling and monitoring the blades **(103 - 113).** The switches and blades can also be connected by a computer network **119** or a segment thereof connecting the blades' NICs (**114, 115**) to the to the switches' NTCs (**116,117**).

Those versed in the art will readily appreciate that the block diagram of **Fig. 1** is by no means binding and accordingly one or more of the components thereof may be modified and/or others may be added, all as required and appropriate depending upon the particular application. For example, the blade server **101** can include more than one chassis **102** (at least one), and can include any number of networking switches (at least one) and any number of blades (at least one) as appropriate to the case. When the blade server includes more than one chassis, each switch can be installed on one chassis, or on several chasses. Having multiple switches allows having networking fail-over, i.e., when one switch fails to provide networking access, a different switch can take over and provide access instead. When more then one switch is installed, the blade can have at least one NIC, each NIC being mapped to a different switch.

It should also be noted that the description below discloses a blade server with Ethernet switches. However, this is non-limiting, and any other suitable networking protocol can also be applicable.

It should also be noted that the blades **105 - 113** can be substantially identical. Therefore, unless specifically noted, when hereinafter reference is made to a blade (such as blade **105**), the disclosed embodiment is applicable to any of the blades **105 - 113.** In the same way, the switches **103 - 104** can also be substantially identical, and therefore, unless specifically noted, when hereinafter reference is made to a switch (such as switch **103**), the disclosed embodiment is applicable to any of the switches **103 - 104.**

Initially, when installing a new blade server **101,** new blades **105** and new switches **103** are swapped in to the chassis, where these blades have no operating systems and no software executables installed on them. Therefore such a blade is referred to, hereinafter, as an unloaded blade. After loading at least a kernel and after setting basic networking configurations, it is possible to load software executables to run on the blades. Therefore, such a blade having at least a kernel and basic networking configuration, and sometimes also an executable stored in its memory is referred to, hereinafter, as a "loaded blade". Examples of software executables that can be loaded on to a blade are firewalls, web or mail servers etc.

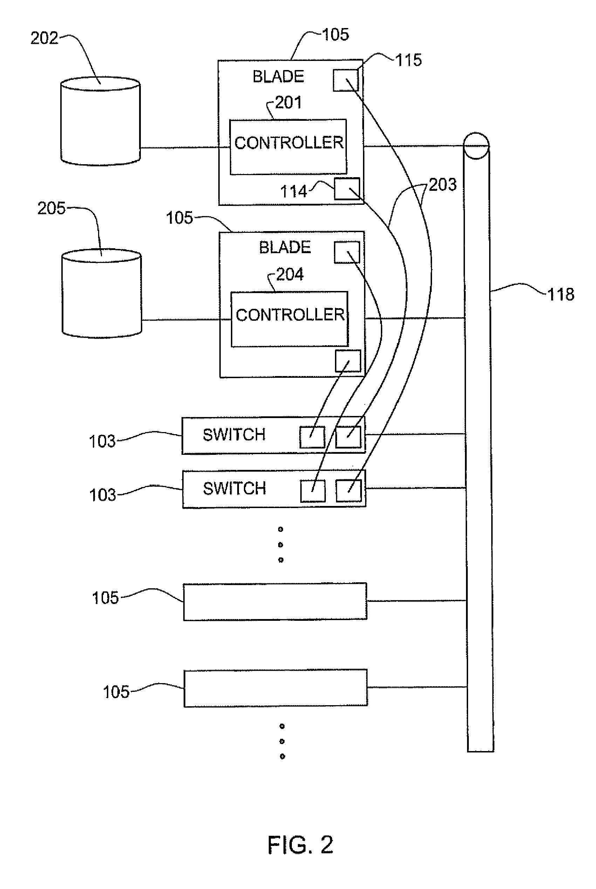

According to an embodiment of the invention, a controller executable, referred to hereinafter as a "controller", can be loaded to a blade. **Fig. 2** is a detailed block diagram illustrating a blade server, according to one embodiment of the invention. A controller **201** is loaded to a blade **105** in association with a storage device **202,** such as a Redundant Array of Independent Disks (RAID). The controller **201** has access to other blades **105** accessible to the same blade server, as well as to the switches **103** thereon (in the exemplary **Fig. 2,** two switches **103** are illustrated). Access can be achieved, e.g., through the bus on the back plane **118.** Like any other blade **105,** a blade on to which a controller **201** is loaded can have network connections **203** through at least one NIC coupled to the blade **105.** The network connections **203** connect the blade **105** to the switches **103,** providing access thereto. In **Fig. 2** two NICs **114** and **115** are illustrated; however, this is not limiting, and those versed in the art will appreciate that at any number of NICs greater than zero can be used. The network connections **203** are part of the server computers network **119** (not shown in **Fig. 2**). It is appreciated that in a non-limiting manner, when more than one NIC is coupled to a blade **105,** each of the multiple NICs can connect to a different switch, as illustrated in the figure and as was previously explained with reference to **Fig. 1.**

According to one embodiment of the invention, one or more controllers can be loaded to at least one blade **105** accessible to a blade server **101**. The embodiment relates to the case when each controller is loaded to a respective blade. However, this is non-limiting, and multiple controllers can be loaded to the same blade if applicable. In the figure, a second controller **204,** redundant to the first controller **201,** provides fault tolerance when the first controller **201** fails. Therefore, the first controller **201** is referred to, hereinafter as a "master controller", while the second controller **204** is referred to, hereinafter, as a "slave controller". In the case that more than one controller **(201, 204)** is provided, each may be substantially identical, and therefore, unless specifically noted, hereinafter reference will be made to the controller **201.** It should be noted that each of the controllers **(201, 204)** can have access to a different storage device **(202, 205** respectively). For example, each controller can be in association with a local disc attached to its blade **105**. The blade **105** can also have an external disc or a RAID device associated therewith, as illustrated in **Fig. 2.** Those versed in the art will appreciate that if the storage device is a RAID or any other storage device providing fault tolerance and/or high availability, the at least two controllers **(201, 204)** can both be coupled to the same storage device **202** (not shown in **Fig. 2**).

It should be appreciated that when the master controller fails, the slave controller can become a master controller, thereby providing fault tolerance. Generally, if there are more than one redundant controller in association with a blade server, one of them is selected to be a master controller, while the others become slaves. The selection of the master controller from the multiple controllers can be random, on a first swapped-in criterion (i.e., the first controller to be swapped in is the master) or according to any other criteria as appropriate. When the master controller fails, one of the slave controllers can become a master controller (therefore referred as a "replacing master"). Again, if there are more than one slave controller, the selection of the replacing master can be done according to any appropriate criteria.

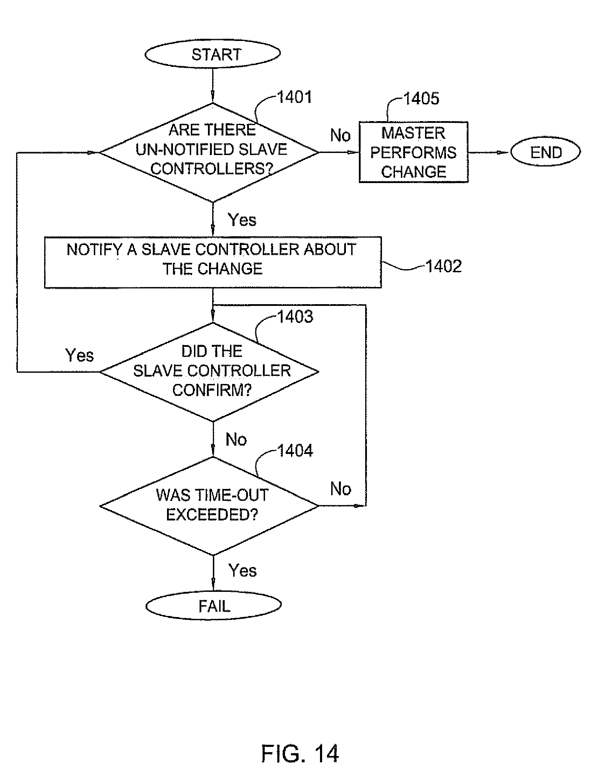

It should be noted that unless specifically noted otherwise, whenever the description below refers to an operation performed by a controller, the description refers to the master controller. The master controller notifies each slave controller of any change, in order to synchronize them and the storage devices associated with them, using a mechanism described below with reference to **Fig. 14**.

Being in association with a storage device **202,** the controller **201** can store data for other blades **105** and switches **103** accessible to the blade server **101.** The data can include, for example, executable code (such as software executables), operating systems (such as UNIX, Linux or Microsoft Windows etc.), configuration data and any other data such as information stored in a database, files, etc. This way, the other switches **103** and blades **105** do not need storage devices to be directly associated therewith. According to the described embodiment, executables running on switches **103** and blades **105,** including, for example, operating systems, scripts and applications, can be stored on the controller's associated storage device **202.** Mounting the controller's associated storage device **202** on a blade, the storage device **202** becomes accessible to the blade, and therefore the blade can run an executable stored thereon. It should be noted that the term "executable" embraces binary code, scripts, Java applets or other software programs that can operate on a computer.

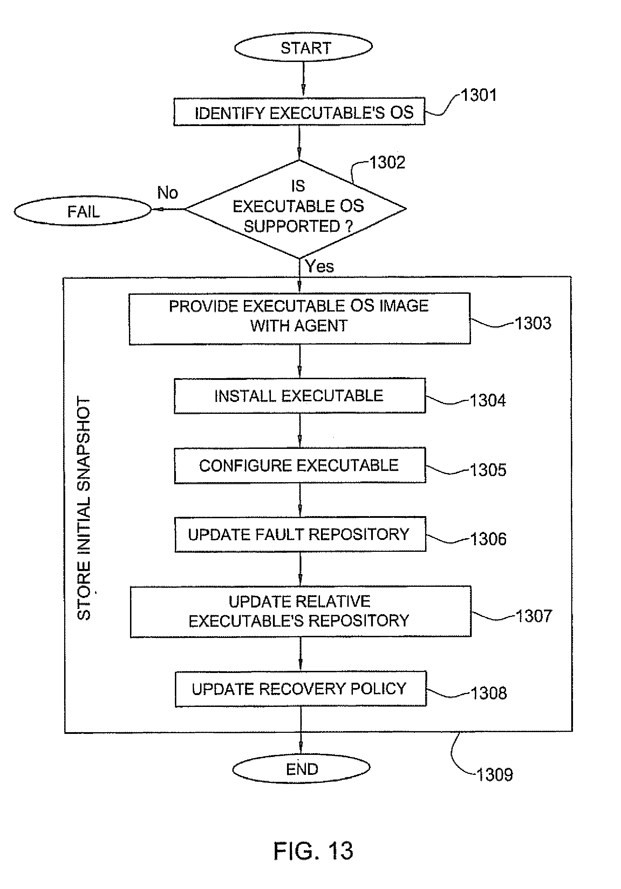

It can be realized, therefore, that according to the described embodiment, where blades can run (i.e., execute) executables stored on the controller's associated storage device **202,** installation of executables can take place on the controller's associated storage device, where data (the executables and their respective data) is stored, instead of being installed on a blade's local storage devices. An embodiment of installing executables on a controller's associated storage device is described below, with reference to **Fig. 13**.

Furthermore, having executables (including operating systems) stored on the storage device, besides providing storage for the blades, the controller can provide boot and set-up services therefor.

When swapping a blade into the blade server, or when re-starting a blade accessible to a blade server, an operating system, or at least a kernel thereof is required in order to boot the blade. When the blades **105** have no local storage devices, or in those cases when no operating systems are loaded to their local storage devices, a mechanism is required to enable boot, startup or basic configuration thereof, referred to hereinafter as "pre-loading procedure".

According to one embodiment of the invention, in order to be able to boot the blade **105** and perform basic configuration on it, Preboot Execution Environment (PXE) should be pre-installed, for example, on the blade's ROM chip or on the boot sector of a blade's dedicated storage device, if one exists. PXE provides a Dynamic Host Configuration Protocol (DHCP) client, which allows the blade **105** to receive an IP address to gain access and to be accessible by the controller **201.** PXE also provides the blade's Basic Input/Output Operating System (BIOS) with a set of Application Program Interfaces (APIs), used to automate the booting of the operating system and other configuration steps. When the blade's power supply is turned on, the blade uses DHCP to receive an IP address from the controller **201** that operates as a DHCP server. The blade **105** also notifies the controller **201** that it is booting, and receives a pointer to a file (such as a file name) that can be used to download the kernel from the controller's associated storage device to the blade's memory. The blade **105** then downloads the file using, for example, Trivial File Transfer Protocol (TFTP) and executes it, which loads the operating system's kernel into the blade's memory. With the kernel can be included also an agent to be running on the blade, where the agent is responsible among other things for allowing the controller **201** to monitor the blade's status, for example. Another exemplary responsibility of the agent is to provide networking services to the blade **105** on which it is running, as explained below.

After the pre-loading procedures, i.e., after the kernel and the agent are loaded to the blade **105,** the blade is operating and ready for running at least one executable. Such a blade is referred to as a pre-loaded blade. According to the disclosed embodiment, executables are stored on the controller's associated storage device, and therefore the controller **201** can load at least one executable on to the blade **105** in order for it to execute (or run) thereon. As was previously mentioned, loading at least one executable can be done by mounting the controller's associated storage device **202** or a partition thereof on the blade **105.** Those versed in the art will appreciate that the controller **201** can identify blades that have passed at least the pre-loading procedures using the bus **118** or the computer network **119**. For example, the agent operating on a swapped-in pre-loaded blade can convey, at a predetermined rate, a data packet indicative of its status. The packets are considered as the blade's heartbeat. By detecting the heartbeat, the controller can monitor the status of the blade, and more specifically, the controller can detect that the blade is swapped-in and operating.

Those versed in the art will appreciate that the blade's heartbeat can be used by the controller **201** also after loading the executable(s) to it, in order to monitor the status of the blade **105** and verify that the blade is operating. Blades whose heartbeat is monitored by the controller are referred to, hereinafter, as "operating blades". In the same way, switches can also have heartbeat, thereby enabling the controller to monitor their status. Switches whose heartbeat is monitored by the controller are referred to, hereinafter, as "operating switches". However, in many aspects there are similarities in handling and monitoring operating switches and operating blades, and therefore, unless specifically noted, the term "operating blades" will refer also to operating switches. Likewise, unless specifically noted, the term "blade heartbeat" denotes also a switch's heartbeat, and "monitoring a blade's heartbeat" applies also to monitoring the heartbeat of a switch etc.

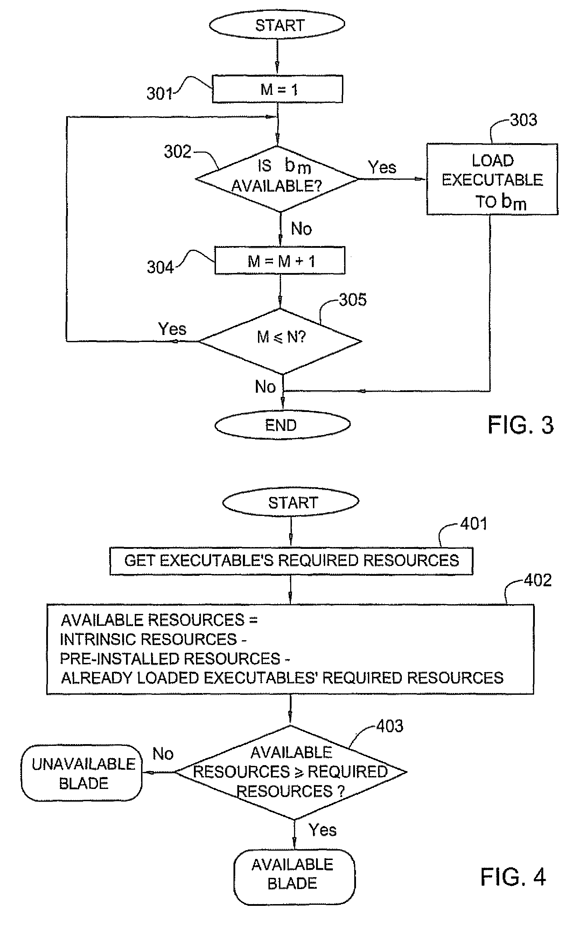

In order to load on to a blade **105** an executable stored on the storage device **202,** the controller **201** has to select an available blade of the blades accessible to the blade server, i.e., a blade that has enough resources to run the executable, as will be explained below. **Fig. 3** is a flowchart showing the principal operations carried out by a controller **201** for selecting an available blade for running an executable, according to one embodiment of the invention. Operating blades **105** (excluding operating switches) accessible to a controller are numbered b*₁*, b*₂*, ..., b*ₙ*. The controller verifies at **302** if a blade b*ₘ* (*l* <= *m* <= *n*) is available for running an executable. If b*ₘ* is found to be available for running the executable, (at **303**) the controller loads the executable on to the blade, wherein the executable together with respective data are stored on the controller's associated storage device **202.** However, if at **302** b*ₘ* is found to be unavailable (i.e., the blade's available resources such as CPU or memory are not enough to run the executable) or the heartbeat of blade b*ₘ* cannot be detected, m is incremented by one **(304),** and next the controller returns to checking the next blade b*ₘ*, unless all potential blades (*n* blades, at **305**) have been tested.

Those versed in the art will readily appreciate that the flow chart of **Fig. 3** is by no means limiting and accordingly one or more of the operations thereof may be modified and/or others may be added, all as required and appropriate depending upon the particular application. For example, it is possible to use dynamic planning algorithms and other variations as apparent to those of average skill in the art.

One of the operations performed in **Fig. 3** is checking whether a blade b*ₘ* is an available blade. **Fig. 4** is a flow chart showing the principal operations carried out by a controller **201** for identifying whether a blade **105** is an available blade for loading an instance of an executable, according to one embodiment of the invention.

In order to determine whether a blade **105** is an available blade for loading an executable, the controller should have access to information about the resources required by the executable **(401),** referred to, hereinafter, as the executable's "required resources". According to one embodiment of the invention, when installing an executable on the controller's associated storage device, it is possible to configure the required resources of the executable, storing it, for example, on the controller's storage device.

In order to determine whether a blade **105** is an available blade, the controller also needs to find out at **402** what are the blade's available resources. It should be noted that a blade's "available resources" are not necessarily the resources available at the time when the controller makes this determination. Thus, there may be occasions when an executable requires a certain amount of resources, although there are times that it can use fewer resources. The available resources are therefore the blade's "intrinsic resources" (i.e., the resources characteristic of the blade **105** before having any executable or operating system loaded on it, that is, when it was an unloaded blade) less the required resources of the operating system and executables that were pre-loaded (the agent, for example, is considered here as an executable), i.e., less the pre-load required resources. However, it is also possible that there are already other executables running on the blade. Therefore, in order to find out what are the available resources on **402,** the controller also has to reduce the required resources of executables that are already loaded on to the blade.

If (at **403**) the available resources are less than the required resources, then the blade is considered unavailable for loading the executable. However, if at **403** the available resources are found to be substantially equal to or more than the executable's required resources, the blade is considered an available blade. However, this is non-limiting and other embodiments may require that the available resources be larger than the executable's required resources in order to establish a blade as an available blade

Those versed in the art will readily appreciate that the flow chart of **Fig. 4** is by no means limiting and accordingly one or more of the operations thereof may be modified and/or others may be added, all as required and appropriate depending upon the particular application. For example, according to a different exemplary embodiment, when installing an executable on the controller it is possible to define a list of executables' priorities used to allocate a blade for loading an executable. When loading the executable, the controller first tries to load it to a blade according to the lowest priority. If it fails, it tries the second lowest priority etc. It is possible to define a "pre-loaded blade" or a "blade with sufficient available resources" in the priority list.

The following simple example demonstrates loading and running three executables (referred to as E*ₐ*, E*_{b}* and E*_{c}*) on a blade server in association with only two blades that are available to run executables (referred to as B*ₐ* and B*_{b}*). In a priority list, "available blade" is the lowest priority, E*ₐ* is the second lowest priority, E*_{b}* is the second highest, and E*_{c}* is the highest priority. The required resources of the three applications allow them to run on each of the two blades B*ₐ* and B*_{b}*, but none of the blades B*ₐ* and B*_{b}* has enough resources to run more than one executable in parallel. First, according to the example, the controller tries to load an instance of E*ₐ*. As "available blade" has the lowest priority in the priority list and as B*ₐ* is found to have enough available resources, the controller loads E*ₐ* to B*ₐ*. Afterwards the controller re-starts E*_{b}*. Again, "available blade" is the lowest priority and Bb is available, therefore the controller loads E*_{b}* to B*_{b}*. Now the controller tries to re-start E*_{c}*. The controller cannot find an available blade and therefore checks the second lowest priority in the priority list, which is A*ₐ*. In this case, the controller would terminate E*ₐ* and load E*_{c}* to B*ₐ* instead, for example, by sending a terminate signal to E*ₐ* or by re-starting the blade. That is, by having a higher priority, E*_{c}* is determined to be "more important" than E*ₐ*, and therefore if it impossible to run both at the same time, the controller prefers E*_{c}* to E*ₐ*.

It should be noted that this example is non-limiting. Blade servers can be in association with more than two blades and they can load more or less than three executables. In addition, an opposite policy can be used when handling the priority list, in a way that the highest priority can be considered first, then the second highest priority etc.

Furthermore, many times executables running on blade servers require access to computer communication networks such as access to Local Area Networks (LANs). It was previously described (with reference to **Figs. 1** and **2**) that a blade is associated with at least one Network Interface Card (NIC) accessible thereby to at least one switch. In the exemplary embodiment of **Fig. 1,** a blade **105** had two NICs (**114** and **115**). Those versed in the art can appreciate that each NIC usually provides access to a single LAN, and therefore, a blade that is in association with two NICs can have access to two LANs etc. However, in a case when the two NICs provide fault tolerance to the blade and are redundant to each other, that means that the blade has access to only one LAN, or more general, to *n*/2 LANs, when *n* is the number of NICs associated with the blade and connected to switches.

It is to be noted that having two NICs for providing network fault tolerance is non-limiting, and it is possible to have a different number of NICs for providing network fault tolerance, as required and appropriate for the case.

Many executables exist that require access to a plurality of LANs. A common, non-limiting example is a firewall. This is achieved in accordance with an embodiment of the invention by an agent that runs on the blade and provides access to multiple virtual bridged LANs.

Those versed in the art will appreciate that the agent can operate, for example, in accordance with IEEE Standard 802.1Q (IEEE Standards for Local and Metropolitan Area Networks: Virtual Bridged Local Area Networks, Approved 8 December 1998) The standard describes, amongst others, Media Access Control (MAC) Bridge management and MAC bridges. That is, the agent, operating in accordance with IEEE 802.1Q can emulate the existence of several NICs although only one NIC is actually in use.

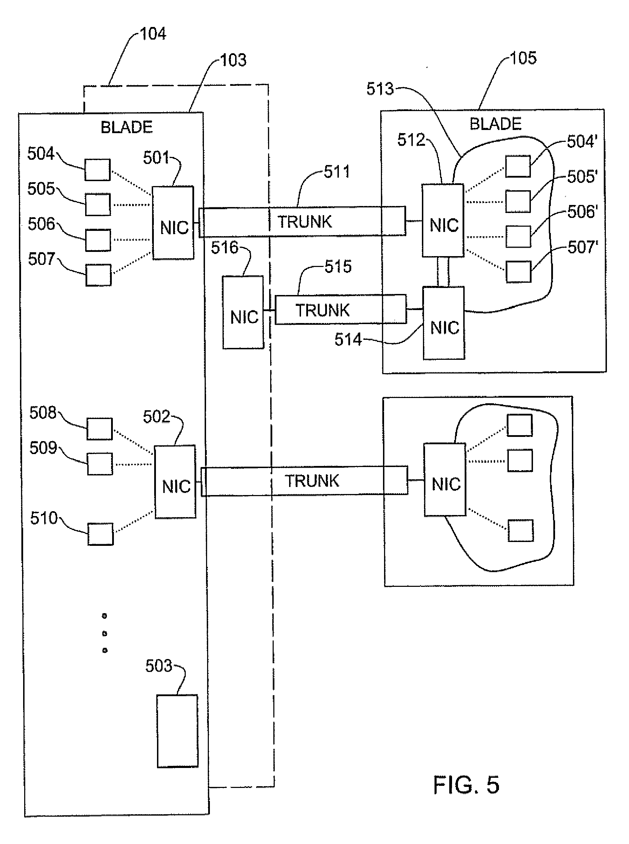

**Fig. 5** is a block diagram illustrating a switch and two blades accessible through multiple virtual bridged LAN's access, according to one embodiment of the invention. A switch **103** is associated with a number of NICs of which there are shown three (**501**, **502** and **503**) by way of non-limiting example. In a general manner, the switch **103** is in association with at least one NIC.

In **Fig. 5** the switch **103** is configured to provide multiple virtual bridged LANs access through the NIGs **501** and **502,** whereas NIC **503** is configured to provide a single LAN access. That is, amongst the NICs associated with a switch, zero or more can be configured to provide virtual bridged LANs access. Also in the figure, the NIC **501** provides access to the virtual NICs **504, 505, 506** and **507** representing four virtual bridged LANs.

The NIC **501** is associated with a trunk **511**. The trunk **511** is also associated with a blade **105,** associated with a NIC **512.** By such means, the switch **103** and the blade **105** are mutually accessible through NICs **501 and 512**, and via the trunk **511**.

As mentioned before, with association to the pre-loading procedures, an agent **513** runs on the blade **105**, and is coupled to the NIC **512.** The agent **513** operates as a switch configured to provide multiple (four, according to this example) virtual bridged LANs through the NIC **512.** In **Fig. 5** the agent **513** is configured therefore to provide four virtual NICs **(504', 505', 506'** and **507'),** each in respect of the four accessible virtual NICs **(504, 505, 506** and **507)** on the switch **103**.

In the figure, the virtual NICs **504** and **504'** together give rise to a virtual bridged LAN. The virtual NICs **505** and **505'** give rise to a second virtual bridged LAN, **506** and **506**' to a third etc.

As was mentioned before, with reference to **Figs. 1** and **2**, a blade can be coupled to more than one NIC providing fault tolerance thereby. In **Fig. 5,** the blade **105** is coupled also to NIC **514** accordingly, that is, the agent **513** is coupled also to NIC **514.** As before, this example is non-limiting, and the agent may be coupled to any plurality of NICs on the blade to provide fault tolerance. The redundant NIC **514** is coupled via a trunk **515** to a second switch **104** that is redundant with respect to switch **103,** and is associated with a NIC **516.** In order to provide fault tolerance to NIC **501,** the NIC **516** should be configured in accordance with NIC **501,** i.e., it should also provide access to the virtual NICs **504, 505, 506** and **507** (this is not illustrated in the figure). In the same way, in order for switch 104 to provide fault tolerance to switch **103,** it should be in association with three NICs (only NIC **516** being illustrated in the figure) corresponding to the NICs **501, 502** and **503,** and each should be configured in a way that provides fault tolerance to its corresponding NIC.

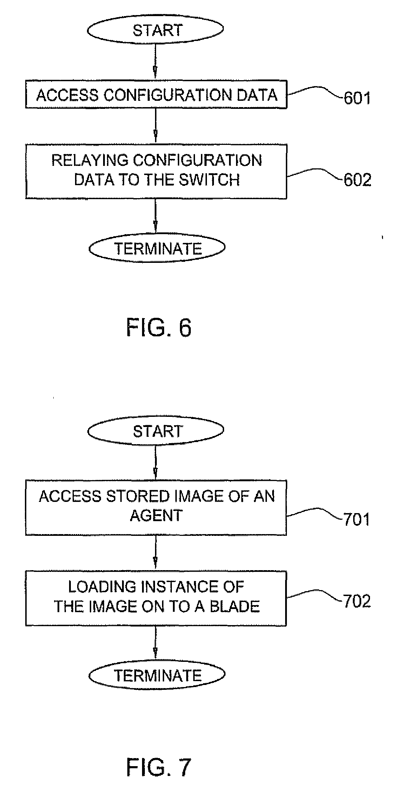

**Fig. 6** is a flow chart showing principal operations carried out by a controller **201** for configuring a switch **103** for providing multiple virtual bridged LANs access, according to one embodiment of the invention. When configuring a switch **103** accessible to the controller **201,** the controller should have access to data indicative of the multiple virtual bridged LANs configuration, if such configuration should exist on the switch. At **601** the controller accesses the configuration data. By relaying the configuration data to the switch **(602),** the switch is configured for providing the blade **105** with access to the multiple virtual bridged LANs. "Relaying data" will be understood by a person versed in the art to include loading the data to the switch's memory. However, this is non-limiting and other embodiments are also applicable, such as commanding the switch to perform configuration settings in accordance with the configuration data as if commanded via a terminal. It should be noted that if redundant switches provide fault tolerance, the controller configures the redundant switches to be identical.

The configuration data can be stored in a storage accessible by the controller, such as the controller's associated storage device **202.** The configuration data can include data such as identification of the switch's NIC (such as NIC **501** in **Fig. 5**) to be configured, identification of the trunk (such as trunk **511** in **Fig. 5**) associated with the NIC, the virtual NICs (for example, in **Fig. 5** these are **504, 505, 506** and **507**) corresponding to the configured NIC, and configuration of the virtual bridged LANs as required by the application that should run on an accessible blade (**105** in the example of **Fig. 5**).

As was previously explained, the controller also runs the agent **513** on a blade, therefore the controller **201** can configure the agent **513** to provide access to at least one virtual bridged LAN, corresponding to the accessible virtual bridged LANs configured on the switch **103. Fig. 7** is a flow chart showing principal operations carried out by a controller for loading an agent **513** providing multiple virtual bridged LANs access on to a blade, according to one embodiment of the invention. The controller **201** accesses an image of the agent stored on its associated storage device (**701**). The agent provides multiple virtual bridged LANs access, and its image stored on a storage device accessible by the controller, such as the controller's associated storage device **202**. Then, the controller **201** loads an instance of the agent's image on to the blade **(702),** providing access to the blade via at least one virtual bridged LAN. It will be appreciated that loading the agent can include running (or starting) the agent, giving rise to an operating agent on the blade.

Before turning to an embodiment of the invention showing principal operations carried out by an agent for providing multiple virtual bridged LANs access to at least one application running on a blade, it should be remembered that in the exemplary embodiment of **Fig. 5,** the agent **513** is associated with a NIC **512** and with a second, redundant NIC **514** that provides network fault tolerance to the blade and to the executables running on it. Being redundant to NIC **512** and providing fault tolerance to it, the NIC **514** should not operate as long as NIC **512** provides communication services to blade **105.** However, if there are redundant switches and redundant NICs, all the switches may provide communication in parallel, whereby the multiple NICs operate in parallel in order to provide network fault tolerance.

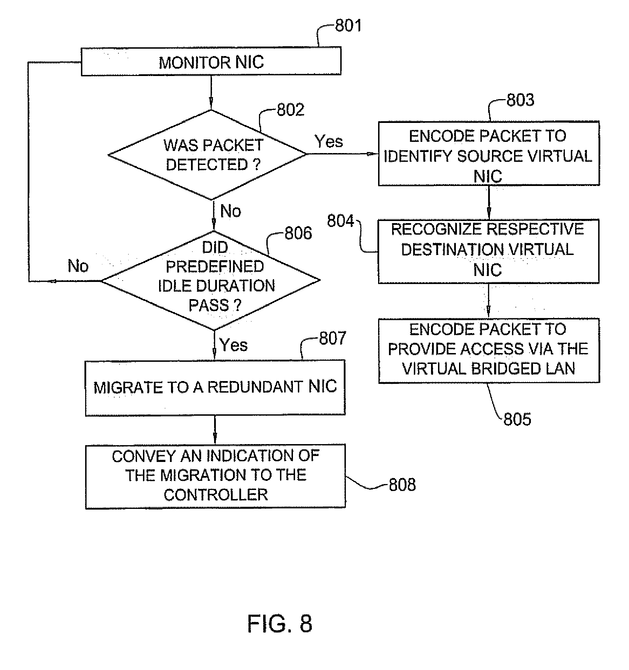

**Fig. 8** is a flow chart showing principal operations carried out by an agent for providing multiple virtual bridged LANs access to at least one executable running on a blade, according to one embodiment of the invention. The agent **513** monitors **(801)** NIC **512.** When the agent detects a network packet that is received on the NIC **(802)** it encodes the packets **(803)** to identify the virtual NICs from where the packets were sent **(504, 505, 506** or **507** in the exemplary embodiment of **Fig. 5),** referred to as a "source virtual NIC". After identifying the source virtual NIC (thereby identifying the virtual bridged LAN), the agent recognizes (**804**) the respective destination virtual NIC (**504', 505', 506'** or **507'** in the example) accordingly. The agent then forwards the packet to the appropriate destination virtual NIC, in accordance with the standard (IEEE 802.1Q), providing access to the blade via virtual bridged LAN.

As explained above, the agent **513** detects and encodes the network packets received on the NIC **512** in order to route them to the appropriate virtual bridged NICs. It should be appreciated, that in parallel to routing the packets, the agent can also monitor networking traffic on the NIC **512**, i.e., traffic to and from the blade. The agent can also tap communication to and from the blade, and provide the information, or part thereof, to any other application on the same blade or on a different, accessible blade.

As mentioned above, the agent, when running on a blade, can also provide network fault tolerance to at least one application running on the blade. Together with monitoring the NIC **512 (802),** the agent observes idle durations **(806)** of the NIC, i.e. if on **806** the agent finds that the NIC is idle for duration substantially longer than a "predefined idle duration", i.e., no network packets (no traffic) are detected during the predefined idle duration or longer, the agent **515** suspects a network fault. One way to provide network fault tolerance is by migrating **(807)** to the redundant NIC **514** associated with the redundant switch **104,** which is also accessible to the blade server. If the network fault occurred in the switch **103,** in the trunk **511** or in NIC **512,** migrating to the redundant NIC **514,** and therefore also to the redundant switch **104**, would bypass the switch **103** so as to provide access to the blade via the virtual bridged LANs.

After migrating to the redundant NIC and switch, the agent communicates with the controller at **808**, conveying an indication of the migration to the controller.

Those versed in the art will appreciate that migrating can be done locally by the agent (wherein the agent is coupled to the NIC, as described with reference to **Fig. 5**), wherein the agent conveys the indication to the controller, or by a different process, external to the agent, that instructs the agent to migrate, and therefore this external process can also convey the indication to the controller instead of the agent.

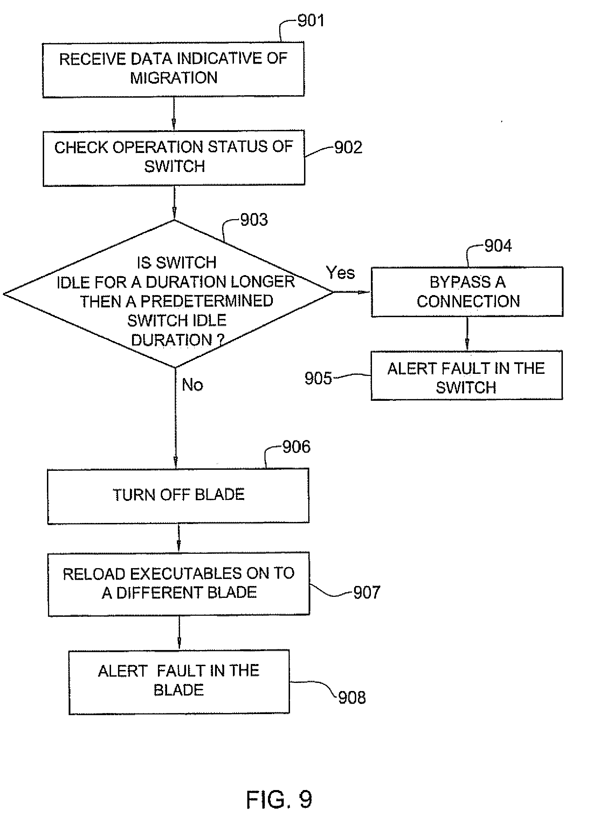

The description turns now to an exemplary embodiment for providing network fault tolerance for a blade server. **Fig. 9** is a flow chart showing principal operations carried out by the controller **201** for providing network fault tolerance, according to one embodiment of the invention.

When the controller receives data indicative of migration from a blade **(901),** for example, data indicating that an agent running on the blade migrated to a redundant NIC and switch, the controller checks the heartbeat (i.e. the operating status) of the switch **103,** i.e., **(902).** Detecting on **903** that the switch **103** is idle (i.e. not operating) at least for a predetermined switch idle duration **(903),** the controller bypasses a connection between the switch and the blade **(904).** A bypass can be achieved by turning the switch off, for example by sending a termination signal over the bus turning the switch off or rebooting it thereby. The controller can also alert fault in the switch **(905).**

However, if the controller finds (on **903**) that the switch is operating, it deduces that the fault occurred in the NIC **512** (coupled to blade **105.**) or in trunk **511.** In this case, according to one embodiment, the controller turns the blade **105** off **(906),** reloads instances of the executables that previously operated on the blade on to a different available blade **(906).** Then the controller can alert the fault in the blade **(907).**

However, according to the embodiment described above, services provided by the blade **105** are characterized by downtime: the time required to turn the blade **105** off and to load instances of the executables that previously ran on it on a different available blade. Yet another embodiment (not shown) can reduce the downtime during which the at least one executable is not operating by identifying an available blade before turning off blade **105.** One should recall that blade **105** is operating and communicating via the redundant NIC **514** and switch **104.** Therefore, the controller can locate an available blade to run the executables before it turn blade **105** off, reducing the downtime thereby.

As can be realized from the description above, the controller should configure the agent to provide the required network configuration in order to be able to run an application on a blade. After loading the kernel and the agent on to the blade (and more accurately, on to the blade's memory) and after configuring the agent, the blade is considered as a pre-loaded blade, where the kernel and the agent consume part of the blade's intrinsic resources, therefore leaving available resources which are smaller than the blade's intrinsic resources. The available resources can be utilized for loading at least one executable.

It should further be noted that while loading an executable on to a blade, the executable (including binary code, scripts etc.) and respective data (constituting together an instance) are usually copied to the blade's memory. When the executable is operating, the data sometimes changes to reflect modifying states of the executable. And more specifically, when an executable is operating, data such as configuration data, information stored in data bases, files or sometimes even the executable itself might change. If the computer is turned off and then turned on, for example, it is sometimes preferred that the executable will start from the state that characterized it when the computer turned off, and not from the state characterized it immediately after the loading, this being referred to as recovery. Alternatively, instead of recovery, it is sometimes preferred to run the executable in the state that characterized it after the initial loading, at some time point in the past, or before the occurrence of the last changes. This is required, for example, when it is suspected that the changes caused the executable's failure. Loading an instance of the executable representative of the executable's state at some point in the past is referred to below as rollback. A recovery policy to be explained below can be used to define what instance should be loaded in the different situations requiring the controller to re-load an executable.

When installing an application on the controller's storage device, an image of the executable, referred to as a "snapshot" can be stored on the controller's storage device. The snapshot associates data such as an operating system and/or kernel, the executable code (such as binary code, script or any other form of executable) and other data such as configuration data (including the agent's network configuration), files, data stored in databases etc, all referred to as snapshot data. Those versed in the art will appreciate that being in association with the snapshot data, a snapshot can include data, it can point (by reference) to data stored, for example, on the controller's associated storage device, or a combination thereof. After the creation of a snapshot, the snapshot reflects the image of the executable as it was at the time of saving, before undergoing further changes.

It was previously mentioned that sometimes it is desirable to provide recovery and/or rollback capabilities when restarting an application. Rollback can go as far as to the point in the past when the executable was installed (before loading it on to a blade on the first time). Therefore, before loading the executable for the first time the controller can store an initial snapshot of the executable. The controller can also store intermediate snapshots of an executable, being images of the executable each saved at a certain time-point in the past, after loading the executable for the first time. Storing a set of intermediate snapshots at different time points while an executable is operating, provides an evolution of the executable, since the intermediate snapshots reflect the changes to the executable.

A snapshot from which an instance is instantiated is referred to, hereinafter, as a "running snapshot". It will be realized that when loading an instance on to an available blade, this instance can undergo changes such as in state, configuration or even in the executable code, etc. Normally, when an executable undergoes changes, the changes are reflected on the storage device from where this executable was started, or on other associated storage devices. Likewise, according to the embodiment, the changes are reflected by the running snapshot that changes whenever the instance changes.

A running snapshot can be generated from any other snapshot (referenced hereinafter as a "source snapshot") for example by copying the source snapshot. In addition, it is possible to generate intermediate snapshots from the running snapshot at different time points, for example by copying it.

It should be noted that sometimes more that one instance of an executable can run at the same time on a blade server. It will readily be appreciated that if there are at least two instances of the same executable, the instances can start from a similar intermediate snapshot, but undergo different, independent changes, giving rise to further dissimilar running snapshots. These different running snapshots can then be used to generate different intermediate snapshots of the same executable.

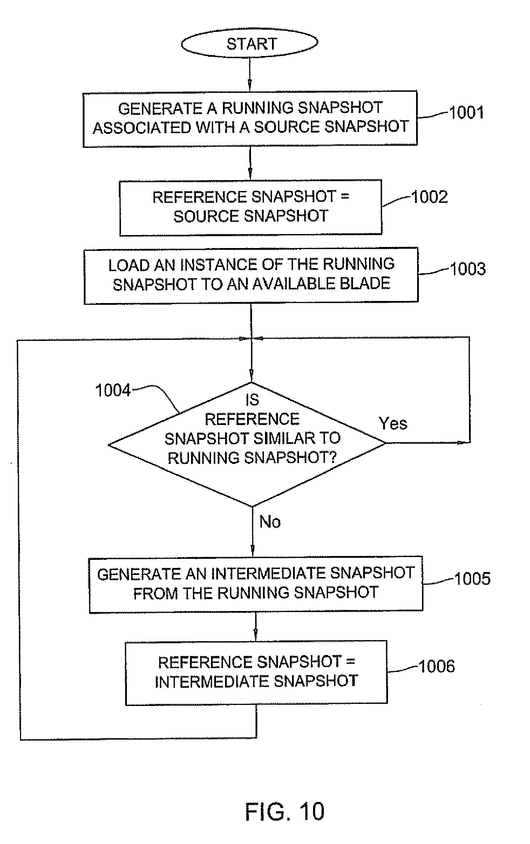

It was previously mentioned that a running instance of an executable reflects the current state of the executable and that it is possible to generate intermediate instances from the running instance. **Fig. 10** is a flow chart showing principal operations carried out by a controller for generating a running snapshot, for loading an instance of the running snapshot to an available blade and for generating intermediate snapshots, according to one embodiment of the invention. Generation of intermediate snapshots can be done, for example, on a cyclic basis as illustrated in **Fig. 10**, or as an event triggered mechanism further suggested below.

In order to understand the snapshot generation and storage process, one should recall that a running snapshot can be generated from any source snapshot, or in other words, the running snapshot is associated with the source snapshot. Those versed in the art can appreciate that "associated with" can mean that the running snapshot is a copy of the source snapshot. However, this is non-limiting and according to other embodiments the source snapshot itself can be used as a running snapshot. Any other form of association that can be used is also applicable.

It is also possible to keep a pointer (such as a file name) to the source snapshot, to serve as a reference snapshot (**1002**). In order to load an instance of the running snapshot to an available blade (**1003**), instantiation is made (for example, by mounting the partition on the blade and starting operation of the executable, as explained above).

By comparing the reference snapshot to the running snapshot **(1004)** on the first cycle after loading, the controller compares the source snapshot to the running snapshot. If the running snapshot had undergone changes, the two snapshots will be different. Therefore, if (on **1004**) the two snapshots are found to be different, an intermediate snapshot is generated from the running snapshot **(1005),** and the reference snapshot is changed to point to this intermediate snapshot **(1006).** Those versed in the art can appreciate that generating an intermediate snapshot from a running snapshot can be done, for example, by copying the running snapshot, wherein the copy is the intermediate snapshot. Therefore, on the following cycles, when comparing the reference snapshot to the running snapshot **(1004)** the controller will compare the last generated intermediate snapshot to the running snapshot, detecting changes to the running snapshot, and generating intermediate snapshots when changes are detected.

Those versed in the art can also appreciate that storing snapshots can also be done in an event triggered mechanism. For example, the controller can use for interrupts signaling modifications to files or disk partitions in order to detect changes to instance referenced by the running snapshot. For example, in the UNIX operating system, whenever changes occur, signals are raised and the controller can use them in order to generate an intermediate snapshot by copying the running snapshot.

The controller can maintain a repository adapted to store an initial snapshot and one or more intermediate snapshots, referred to hereinafter as a "repository of snapshots", the snapshots reflect the changes that occurred in the past in instances of the application and allow rollback thereby.

It was previously mentioned that recovery policies can be used to select an intermediate snapshot that should serve as a source snapshot for generating a running snapshot. That way, the recovery policy can determine, for example, that in re-load after normal termination the controller should perform normal recovery, i.e., it should load the most recent snapshot stored in the repository of snapshots. But in any case of failure the policy can determine that the controller should select at least one snapshot older then the most recent snapshot. It should be noted that this example is non-limiting and any other policy can be used whenever required and appropriate.

It is possible to provide a management utility that provides the ability to delete old intermediate snapshots, to store them on external storage devices such as tapes, or to perform any other management activity, as can be appreciated by a person skilled in the art. The management utility can operate on a cyclic basis, performing its tasks once in a certain time interval, it can also be event-triggered (for example, started when a certain predetermined percentage of the storage device's capacity is consumed) or it can be operated by a system operator.

It should be noted that storing and/or deleting snapshots from the repository of snapshots can be affected by the recovery policy of an application. For example, if the recovery policy determines that it is always the most recent intermediate snapshot that is used for recovery, and the controller should never perform roll-back to older intermediate snapshots, the management utility can delete intermediate snapshots, leaving only the latest one in the repository of snapshots, saving storage space thereby. In other embodiments the controller can ignore recovery policies when managing the repository of snapshots.

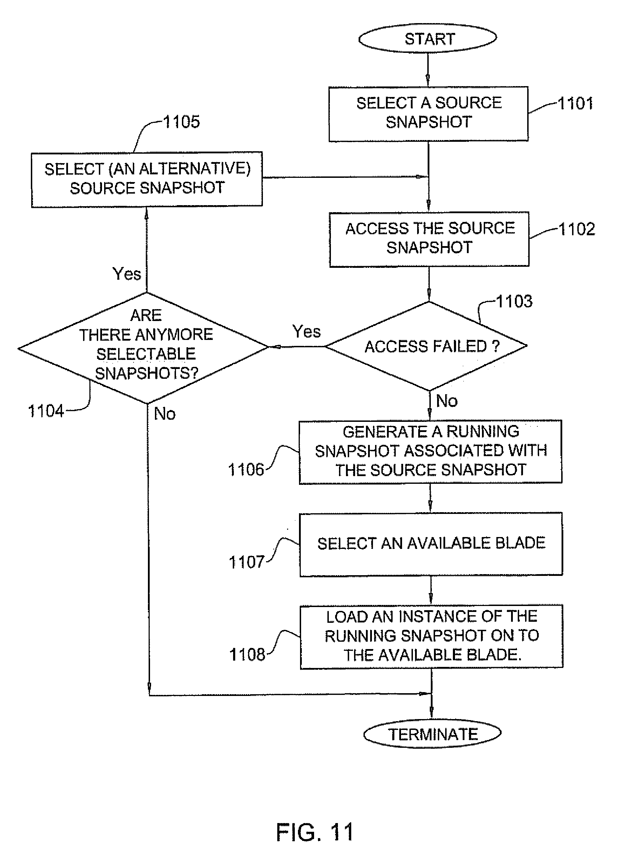

After having described how intermediate snapshots can provide the options of recovery and rollback, there will now be described with reference to **Fig. 11** a flow chart showing in detail the operations carried out by a controller for loading an instance of at least one executable on an available blade. The controller selects a source snapshot **(1101)** of at least one executable, stored on a partition of the controller's associated storage device, as described with reference to **Fig. 10.** Then the controller accesses the source snapshot **(1102).** If the controller cannot access the source snapshot **(1103),** for example, because of storage device faults), and if there are other selectable snapshots **(1104,** i.e., different intermediate snapshot of the same at least one executable or the initial snapshot thereof) it can nevertheless select a source snapshot out of the selectable snapshots **(1105)** and try to access this source snapshot **(1102).** The controller can use a recovery policy in order to select a source snapshot and/or alternative source snapshots, as was explained above. This can be repeated as long as there are more selectable snapshots.

After selecting a source snapshot and accessing this selected source snapshot, the controller generates a running snapshot associated with the source snapshot (**1106**).

The controller also selects an available blade (**1107**) from among the operating blades accessible to the blade server. This can be done, for example in accordance with the operations described with reference to **Fig. 3**. The controller can then instantiate an instance of the running snapshot, loading the instance to the available blade **(1108).**

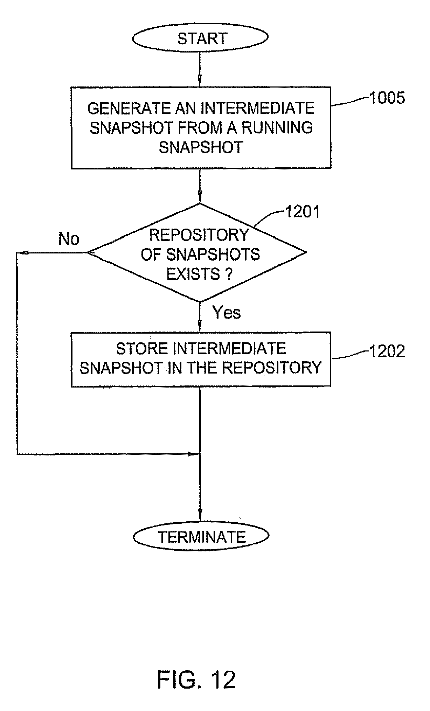

**Fig. 12** is a flow chart showing the operations carried out by a controller for storing an intermediate snapshot in a repository of snapshots, according to one embodiment of the invention. After generating an intermediate snapshot from a running snapshot, it a repository of snapshots exists for the snapshot, the intermediate snapshot is stored therein.

It will be appreciated in light of the above description, that when restarting an application (for providing recovery or rollback) the controller can load it on any available blade, and not necessarily on the same blade where it was previously loaded. That is, if, for example, a blade stops operating because of some fault, when the controller detects that the application (or blade) is not operating it can reload the application to a different blade and restart it thereon, providing fault tolerance. In the same way, if the controller monitors the resources available on a blade running instances of at least one application, when the controller notices that the blade's resources (for example: memory) are about to be exhausted it can load new instances of the application(s) to other available blades. The new instances can be generated either from snapshot or from any other intermediate or running snapshots of the running instances. By running multiple instances of the same application at the same time, the controller can provide load balancing.

It was previously mentioned, with reference to **Fig. 2,** that according to one embodiment of the invention executables are installed on a controller's storage device. **Fig. 13** is a flow chart showing the principal operations carried out by a controller for installing an executable on the controller's storage device, according to one embodiment of the invention. It will be noted that different blades accessible to a blade server can run different executables, when on each blade the executables require a different operating system, or at least a different kernel. Therefore, in order to install an application, the controller should identify the required operating system (or kernel) required for the installed executable (**1301**). If (on **1302**) the executable requires an operating system not supported by the controller, the installation fails as the controller cannot provide the installation and the executable with the required operating system.

After identifying the required operating system and verifying that the required operating system is supported by the controller, the controller provides an image (**1303**) to which associated is the required operating system and/or kernel. With the image is associated also the agent. It should be noted that a kernel or an operating system, in association with its configuration data (also including for example script files) and in association with networking configuration, can form a snapshot that can be loaded to a blade.

During installation **(1304),** the executable and the configuration data (if such data exists, that is, if the executable is configured at all at (**1305**)) is also stored in association with the image to form an initial snapshot. The initial snapshot can also be in association with a fault repository listing faults and required actions from the controller, in association with a list of relative executables' priorities (i.e., the priority list), used by the controller if re-start on a different blade is required (for fail over recovery or for load balancing) and in association with a recovery policy etc. When all these (the configuration data, the faults repository, the executables' priority list, the recovery policy or any other data) are updated (**1306, 1307**) for the executable being installed, the controller can store the initial snapshot, terminating the installation thereby. Later this initial snapshot can be used to create running snapshots as was previously explained above. That is, steps **1303 - 1308** can be considered together as storing the initial snapshot (**1309**).

It should be noted that this embodiment and flow chart are non-limiting. One or more of the steps can be absent, other steps can be added, and their order can change, as appropriate to the case. For example, a snapshot need not necessarily include the operating system and an agent. In such an embodiment "storing an initial snapshot" **(1309)** can include only steps **1304 - 1308.**

Reverting back again to **Fig. 2** and its description, it was specified that there can be more than one redundant synchronized controller serving as a master controller and at least one slave controller, providing fault tolerance thereby. **Fig. 14** is a flow chart showing the operations carried out by a master controller for synchronizing at least one slave controller, according to one embodiment of the invention.

Before describing **Fig. 14**, it should be noted that it is possible to refer to the current environment of the controller (i.e. the initial, intermediate and running snapshots and their repositories, network configurations, executables' priority list etc.) as a model. A person skilled in the art will appreciate that it is possible to have more than one model stored on a controller's associated storage device, one of them being active and the other are idle, thereby referred to as "active model" and "idle model".

When a change occurs in the active model (network configuration change, data being stored in the controller's storage device or any other change that is reflected in the active model), the master controller can perform a two-phase commit in order to certify that the slave controllers will also reflect the change. When a change occurs, the master controller notifies the all slave controllers **(1401, 1402)** about the change. Now the master controller waits for the slave controllers to confirm the change **(1403).** For example, if the change is data that should be stored on the controller's storage device, a slave controller can confirm the change after storing the data in its storage device, certifying the successful storage thereby. If no confirmation arrives within a certain predefined time-out (1404), the change fails (according to this example, when the change is data to be stored, the master controller can fail to store the data). However, if the slaves' confirmations arrive on time, the master controller performs the change (1405), by storing the data in its storage device.

Understanding the invention as disclosed above, those versed in the art can appreciate that by having a first controller (master or slave) in association with a storage device where an active model exists, it is possible to duplicate the first blade server by swapping the first controller and its associated storage device into another blade server. On start-up, the first controller creates another, redundant controller in association with the other blade server, wherein the redundant controller synchronizes with the first controller and becomes identical thereto. Then one of the controllers become a master controller and loads the active model onto the other blade server. Because the two controllers are identical, and are the same as was on the first blade server, the other blade server becomes a duplicate of the first blade server.

It is noted, however, that after loading the active model to the other blade server, the active model (i.e., the images, the network configuration etc) on the other blade server (and therefore on the first and other controllers) may change and differentiate from the first blade server.

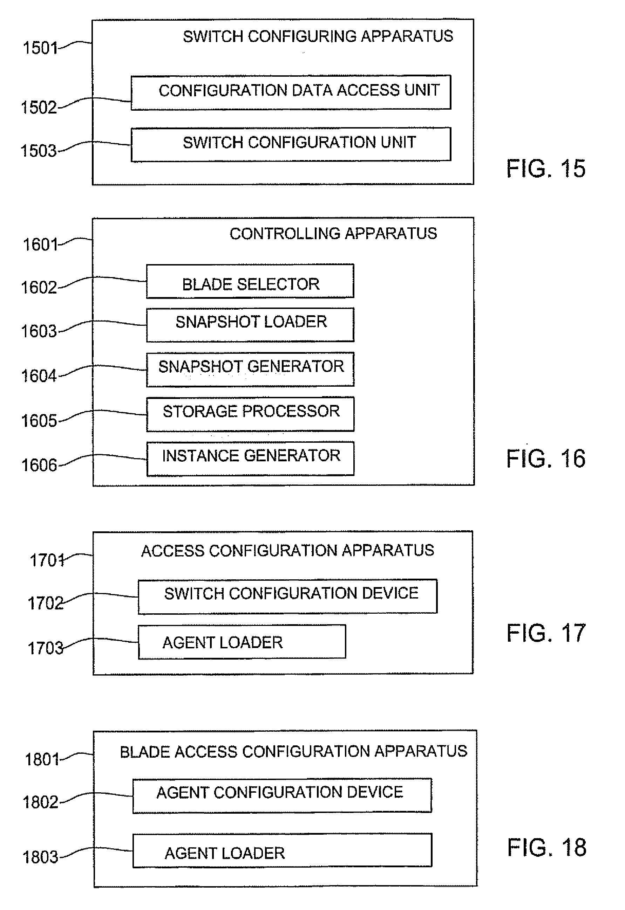

**Fig. 15** is a block diagram illustrating a switch configuration apparatus **1501** for configuring a switch associated with a blade server providing access to at least one virtual bridged LAN, according to one embodiment of the invention. Those versed in the art can appreciate that the controller be coupled to such an apparatus.

The switch configuration apparatus **1501** includes a configuration data access unit **1502** and a switch configuration unit **1503.** The configuration data access unit can access configuration data stored on an accessible storage device (as is shown at **601** in **Fig. 6**). The switch configuration unit can relay configuration data to a switch for providing access to said at least one virtual bridged LAN, thereby configuring the switch (as is shown at **602** in **Fig. 6**).

**Fig. 16** is a block diagram illustrating modules comprising a controlling apparatus **1601** accessible to a blade server, according to one embodiment of the invention. The controlling apparatus **1601** includes a blade selector **1602**, a snapshot loader **1603**, a snapshot generator **1604**, a storage processor **1605** and an instance generator **1606**. The blade selector **1602** selects an available one of at least one blades for loading an instance of a running snapshot (such as previously described with reference to **Fig. 3**). The snapshot loader **1603** loads an instance of a running snapshot to the available blade selected by the blade selector (**1003** in **Fig. 10**). The snapshot generator **1604** generates intermediate snapshots from running snapshots (as described above with reference to **Fig. 10**).

The storage processor **1605** stores intermediate snapshots in a repository of snapshots, adapted to store one or more intermediate snapshots. The instance generator **1606** instantiates initial snapshots or intermediate snapshots, loading them to an available blade thereby. One exemplary way to instantiate and load an instance to an available blade is described with reference to **Fig. 10** (see **1003**).

**Fig. 17** is a block diagram illustrating an access configuration apparatus **1701,** according to one embodiment of the invention. The access configuration apparatus **1701** includes a switch configuration device **1702** and an agent loader **1703.** The switch configuration device **1702** configures switches coupled to a blade server to allow access to at least one virtual bridged LAN. The agent loader **1703** loads agents to blades accessible to the blade server. A loaded agent is configured to provide access to at least one virtual bridged LAN that was (or will be) configured on a switch accessible to the blade by the switch configuration device.

**Fig. 18** is a block diagram illustrating a blade access configuration apparatus **1801** including an agent configuration device **1802** and an agent loader **1803**. The agent configuration device **1802** configures images of an agent, so that the agent can provide access to at least one virtual bridged LAN. The agent loader **1803** loads instances of agent images to blades for allowing the blades to access at least one virtual bridged LAN, as was (or will be) configured by the agent configuration device. It is noted that the agent loader **1803** of the blade access configuration apparatus **1801** and the agent loader **1703** of the access configuration apparatus **1701** shown in Fig. **17** can be identical.

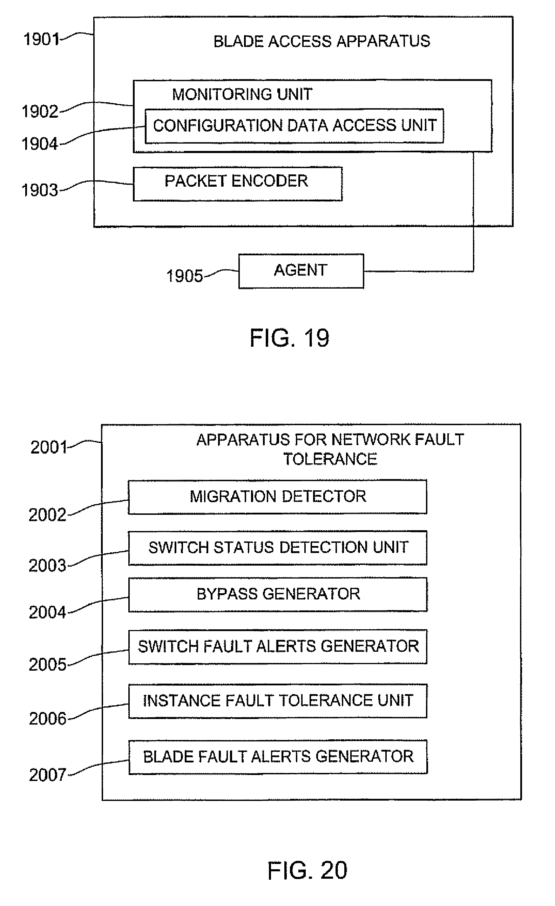

**Fig. 19** is a block diagram illustrating a blade access apparatus **1901** that runs on a blade accessible to a blade server and includes a monitoring unit **1902** and a packet encoder **1903.** The monitoring unit **1902** monitors a NIC coupled to the blade (for an example, see **Fig. 5**), and it can include a network failure protection unit **1904** that observes idle durations of the NIC, and migrates to a redundant NIC if an idle duration is substantially longer than a predefined duration, thereby providing network failure protection. The packet encoder **1903** encodes network packets received on the NIC monitored by the monitoring unit **1902.** That way the packet encoder provides the blade with access to at least one virtual bridged LAN.

The network failure protection unit **1904** is coupled to an agent **1905**, which is adapted to convey indications to a controller coupled to the same blade server when the network failure protection unit migrates to a redundant NIC. It will be appreciated that the agent **1905** can be included in the blade access apparatus **1901,** the blade access apparatus **1901** can be included in the agent **1905,** or they can be separate units coupled by any known means, such as pipes, network connections or others, as illustrated in **Fig. 19.**

**Fig. 20** is a block diagram illustrating a network fault tolerance apparatus **2001** that includes a migration detector **2002**, a switch status detection unit **2003**, a bypass generator **2004**, a switch fault alerts generator **2005**, an instance fault tolerance unit **2006** and a blade fault alerts generator **2007**. It will be appreciated that the network fault tolerance apparatus **2001** can be included, for example, in the controller accessible to a blade server.

The migration detector **2002** receives migration indications from blades, indicative that agents loaded to the blades migrated to redundant NICs. The switch status detection unit **2003** checks the status of switches having access to blades accessible to the blade server (and mainly to switches having access to the migrating blades), for example by detecting their heartbeat.

The bypass generator **2004** bypasses a connection between the switch and the blade having access to it. A bypass is generated, for example, when the switch status detection unit **2003** detects that a switch is not operating. The switch fault alerts generator **2005** alerts that one or more faults occurred in switches, for example when the switch status detection unit **2003** detects faults in the switches' operation.

However, if the network fault tolerance apparatus **2001** detect no faults in the switches, it is most probable that migration detected by the migration detector **2002** was caused by faults in the trunks or in the blades. Therefore, the instance fault tolerance unit **2006** can load at least one instance on to a different blade accessible to the blade server. The blade fault alerts generator **2007** alerts one or more faults in blades.

It will also be understood that the apparatus according to the invention may be a suitably programmed computer. Likewise, the invention contemplates a computer program being readable by a computer for executing the method of the invention. The invention further contemplates a machine-readable memory tangibly embodying a program of instructions executable by the machine for executing the method of the invention.

## Claims

1. A method for providing access to a blade associated with a blade server via at least one virtual bridged Local Area Network (LAN), the method comprising:
configuring a switch coupled to said blade server for allowing access to said at least one virtual bridged LAN; and
loading an agent to said blade being configured to provide access to said at least one virtual bridged LAN.

2. A method for configuring a switch associated with a blade server for providing access to at least one virtual bridged Local Area Network (LAN), the method comprising:
accessing configuration data stored on an accessible storage device; and
relaying said configuration data to said switch for providing access to said at least one virtual bridged LAN.

3. A method for providing access to a blade associated with a blade server via at least one virtual bridged Local Area Network (LAN), the method comprising:
configuring an image of agent for providing access to said at least one virtual bridged LAN; and
loading an instance of said image to said blade for allowing said blade to access said at least one virtual bridged LAN.

4. A method for providing access to a blade associated with a blade server via at least one virtual bridged Local Area Network (LAN), the method comprising:
monitoring a Network Interface Card (NIC) coupled to said blade; and
encoding network packets received on said NIC for providing said blade with access to said at least one virtual bridged LAN.

5. The method of Claim 4, wherein said monitoring includes:
observing idle duration of said NIC; and
migrating to a redundant NIC for providing network fault tolerance if said idle duration is substantially longer than a predefined duration.

6. The method of Claim 5, wherein:
the migrating is performed locally by an agent coupled to the NIC; and
the agent is adapted to convey data indicative of said migrating to a controller coupled to the blade server.

7. A computer program being readable by a computer for executing the method of claims 1 to 6.

8. The computer program of claim 7 tangibly embodied on a machine-readable memory.

9. An access configuration apparatus for providing access to a blade associated with a blade server via at least one virtual bridged Local Area Network (LAN), the apparatus comprising:
a switch configuration device for configuring a switch coupled to said blade server for allowing access to said at least one virtual bridged LAN; and
an agent loader for loading an agent to said blade, the agent being configured to provide access to said at least one virtual bridged LAN, configured on the switch by the switch configuration device.

10. A blade access configuration apparatus for providing access to a blade associated with a blade server via at least one virtual bridged Local Area Network (LAN), the apparatus comprising:
an agent configuration device for configuring an image of an agent for providing access to said at least one virtual bridged LAN; and
an agent loader for loading an instance of said image to said blade for allowing said blade to access said at least one virtual bridged LAN, configured by the agent configuration device.

11. A switch configuration apparatus for configuring a switch associated with a blade server for providing access to at least one virtual bridged Local Area Network (LAN), the apparatus comprising:
a configuration data access unit for accessing configuration data stored on an accessible storage device; and
a switch configuration unit coupled to said configuration data access unit for relaying said configuration data to said switch for providing access to said at least one virtual bridged LAN.

12. An apparatus for providing access to a blade associated with a blade server via at least one virtual bridged Local Area Network (LAN), the apparatus comprising:
a monitoring unit for monitoring a Network Interface Card(NIC) coupled to said blade; and
packet encoder for encoding network packets received on said NIC for providing said blade with access to said at least one virtual bridged LAN.

13. The apparatus of Claim 12, wherein said monitoring unit includes:
a network failure protection unit coupled to said NIC, for observing idle duration of the NIC, and migrating to a redundant NIC for providing network failure protection if said idle duration is substantially longer than a predefined duration.

14. The apparatus of Claim 13, wherein:
the network failure protection unit is coupled to an agent, which is adapted to convey an indication of said migrating to a controller coupled to the blade server.
